**Europäisches Patentamt**

**European Patent Office**

**Office européen des brevets**

(11) Veröffentlichungsnummer : **0 137 383 B1**

# EUROPÄISCHE PATENTSCHRIFT

(45) Veröffentlichungstag der Patentschrift :
27.07.88

(51) Int. Cl.⁴ : **H 04 M   1/18**

(21) Anmeldenummer : **84111270.9**

(22) Anmeldetag : **21.09.84**

(54) Telefon, insbesondere Autotelefon.

(30) Priorität : 11.10.83 CH 5528/83
15.12.83 CH 6678/83
27.08.84 CH 4080/84

(43) Veröffentlichungstag der Anmeldung :
17.04.85 Patentblatt 85/16

(45) Bekanntmachung des Hinweises auf die Patenterteilung : 27.07.88 Patentblatt 88/30

(84) Benannte Vertragsstaaten :
AT CH DE FR GB IT LI NL SE

(56) Entgegenhaltungen :
FR-A- 1 262 722
US-A- 3 878 343
US-A- 4 153 822
MOTOROLA technical developments, Band 3, Nr. 1,
März 1983, Seiten 8, 9, SCHAUMBURG, ILLINOIS,
(US) D. IRVING: "Handset latch & delatch system".

(73) Patentinhaber : **Peiker, Andreas**
**Terracinaweg 5 Postfach 20 55**
**D-6380 Bad Homburg v.d. Höhe (DE)**

(72) Erfinder : **Peiker, Andreas**
**Terracinaweg 5 Postfach 20 55**
**D-6380 Bad Homburg v.d. Höhe (DE)**
Erfinder : **Kehry, Manfred**
**Talblick 28**
**D-7240 Horb 1 (DE)**

(74) Vertreter : **Keller, René, Dr. et al**
**Patentanwälte Hartmut Keller, Dr. René Keller Postfach 12**
**CH-3000 Bern 7 (CH)**

## Beschreibung

Die Erfindung betrifft ein Telefon gemäss dem Oberbegriff des Patentanspruchs 1, insbesondere ein Autotelefon, wobei das Telefon zum Gegensprechen oder zum Wechselsprechen ausgebildet sein kann.

Telefone dieser Art sind von jenen zu unterscheiden, bei denen der Sprechhörer durch zwei Rasten an der Halterung gehalten ist, deren Rastwiderstand sowohl beim Auflegen als auch beim Abheben durch Druck bzw. Zug auf den Sprechhörer überwindbar ist. Bei einem bekannten Autotelefon (US-PS 4 153 822) jener anderen Art ist in üblicher Weise an zwei die einander zugewandten Seiten der Sprech- und der Hörmuschel abstützenden Erhebungen je eine in eine Vertiefung dieser Muschelseiten eingreifende Rastfeder angeordnet. Weil der Sprechhörer nur durch die Rastfederkraft an der Halterung gehalten ist, besteht die Gefahr, dass er bei einem Unfall aus der Halterung herausspringt und die Autoinsassen verletzt.

Ein Telefon der eingangs genannten Art, bei dem der Sprechhörer durch zwei Sperren gegen Zug gesichert an der Halterung gehalten und nur duch Betätigung einer auf die eine Sperre wirkenden Ausrückvorrichtung abgehoben werden kann, ist aus Motorola technical developments, Band 3, Nr. 1, März 1983, S. 8/9 bekannt. Es hat eine in einem Fahrzeug zu befestigende Halterung, in welche die Hörmuschel des Sprechhörers einzusetzen ist. Die in die Halterung eingesetzte Hörmuschel ist an ihrer Vorder- und Rückseite durch je eine Sperre gegen Zug gesichert gehalten. Die eine Sperre ist eine nach Art einer Schlossfalle ausgebildete, durch eine Feder belastete Sperrklinke, die andere Sperre eine fest an der Halterung gebildete Nase. Die federbelastete Sperrklinke ist mittels einer Aussrückvorrichtung lösbar. Die Hörmuschel hat an ihrer Vorder- und Rückseite je einen Vorsprung. Der vordere, schräg nach oben gerichtete Vorsprung greift unter die Nase, der hintere Vorsprung unter die Sperrklinke.

Zum Einführen der Hörmuschel in die Halterung muss der Sprechhörer geneigt werden, so dass die Hörmuschel unten und die (nicht dargestellte) Sprechmuschel oben liegt. Die Hörmuschel wird dann in die Halterung so eingefügt, dass ihr vorderer Vorsprung unter die Nase zu liegen kommt. Anschliessend wird der hintere Teil des Sprechhörers nach unten gedrückt, bis die Sperrklinke am hinteren Vorsprung der Hörmuschel einschnappt. Zum Lösen des Sprechhörers wird die Ausrückvorrichtung gedrückt und der Hörer zunächst mit dem hinteren Ende (Sprechmuschel) nach oben geschwenkt, so dass sich der vordere Vorsprung der Hörmuschel von der Nase löst, woraufhin der Hörer in der geneigten Lage aus der Halterung herausgezogen wird.

Das Einführen der Hörmuschel in die Halterung erfordert einige Aufmerksamkeit, weil der Sprechhörer dazu in eine bestimmte, geneigte Lage gebracht und mit der Muschel unter Beibehaltung dieser Lage schräg in die Halterung eingeführt werden muss. Dadurch wird die Aufmerksamkeit des Autofahrers vom Verkehr abgelenkt und es besteht die Gefahr, dass der Fahrer in Verkehrsituationen, die besondere Aufmerksamkeit erfordern, den Sprechhörer einfach neben die Halterung ablegt. Dann ist der Hörer nicht mehr gesichert und kann bei einem Unfall die Autoinsassen verletzen. Weil nur das eine Ende des Sprechhörers, nämlich nur die Hörmuschel durch die beiden Sperren an der Halterung gesichert ist, können ferner bei einem Unfall die auf den übrigen Teil des Sprechhörers wirkenden Kräfte ein erhebliches Drehmoment ausüben, so dass die Sperrklinke den Sprechhörer nicht mehr zu halten vermag, wenn sie nicht sehr stabil ausgeführt ist. Eine entsprechend massive Ausführung der Sperrklinke erschwert aber das Einfügen und Sichern der Muschel in der Halterung.

Der Erfindung liegt die Aufgabe zugrunde, den aufgelegten Sprechhörer so an der Halterung zu verankern, dass er sich bei einem Unfall unter keinen Umständen von der Halterung lösen und die Autoinsassen verletzen kann, dass er aber trotzdem mühelos aufgelegt und abgehoben werden kann.

Die erfindungsgemässe Lösung dieser Aufgabe ist Gegenstand des Patentanspruchs 1. Bevorzugte Ausführungsarten sind in den Patentansprüchen 2 und 3 umschrieben.

Andere Lösungen dieser Aufgabe sind in der Teilanmeldung EP-A-235776 angegeben.

Da der Sprechhörer beidseits seines Schwerpunkts sowohl mit seinem die Sprechmuschel als auch mit seinem die Hörmuschel aufweisenden Teil an der Halterung gehalten ist, können bei einem Unfall die auf den Sprechhörer wirkenden Kräfte nicht durch Hebelwirkung so verstärkt werden, dass die betreffende Sperre den Sprechhörer nicht mehr zu halten vermag. Mit der erfindungsgemässen Lösung wird vor allem erreicht, dass beide Sperren beim üblichen Auflegen des Sprechhörers zuverlässig einrücken und zwar unabhängig von der Lage des Sprechhörers beim Auflegen, d. h. unabhängig davon, ob zuerst die Sperrklinke oder zuerst die Nase einrückt. Dadurch wird die Gefahr vermieden, dass die Aufmerksamkeit des Fahrers beim Auflegen des Sprechhörers vom Verkehr abgelenkt wird und der Fahrer in Verkehrssituationen, die besondere Aufmerksamkeit erfordern, den Sprechhörer einfach neben die Halterung ablegt.

Im folgenden werden anhand der Zeichnung Ausführungsbeispiele der Erfindung näher erläutert. Es zeigen :

Fig. 1 eine perspektivische Ansicht eines Autotelefons,

Fig. 2 eine teilweise geschnittene Seitenansicht des Autotelefons von Fig. 1,

Fig. 3 eine teilweise geschnittene Draufsicht auf einen die Sperre für die Hörmuschel und die Ausrückvorrichtung aufweisenden Teil der Halterung des Autotelefons von Fig. 1,

Fig. 4 einen Querschnitt durch die Halterung des Autotelefons nach der Linie IV-IV in Fig. 3,

Fig. 5 eine teilweise geschnittene (Linie V-V in Fig. 6) Seitenansicht eines Teils einer Weiterbildung des Autotelefons von Fig. 1-4,

Fig. 6 eine teilweise geschnittene Draufsicht auf den die Sperre für die Hörmuschel und die Ausrückvorrichtung enthaltenden Teil der Halterung des Autotelefons von Fig. 5,

Fig. 7 eine Ansicht der Sperre und Ausrückvorrichtung in Blickrichtung VII in Fig. 6, ohne die Halterung,

Fig. 8 eine Unteransicht des in Fig. 5 dargestellten Teils des Sprechhörers,

Fig. 9 eine teilweise geschnittene Seitenansicht des in Fig. 5 dargestellten Teils des Sprechhörers.

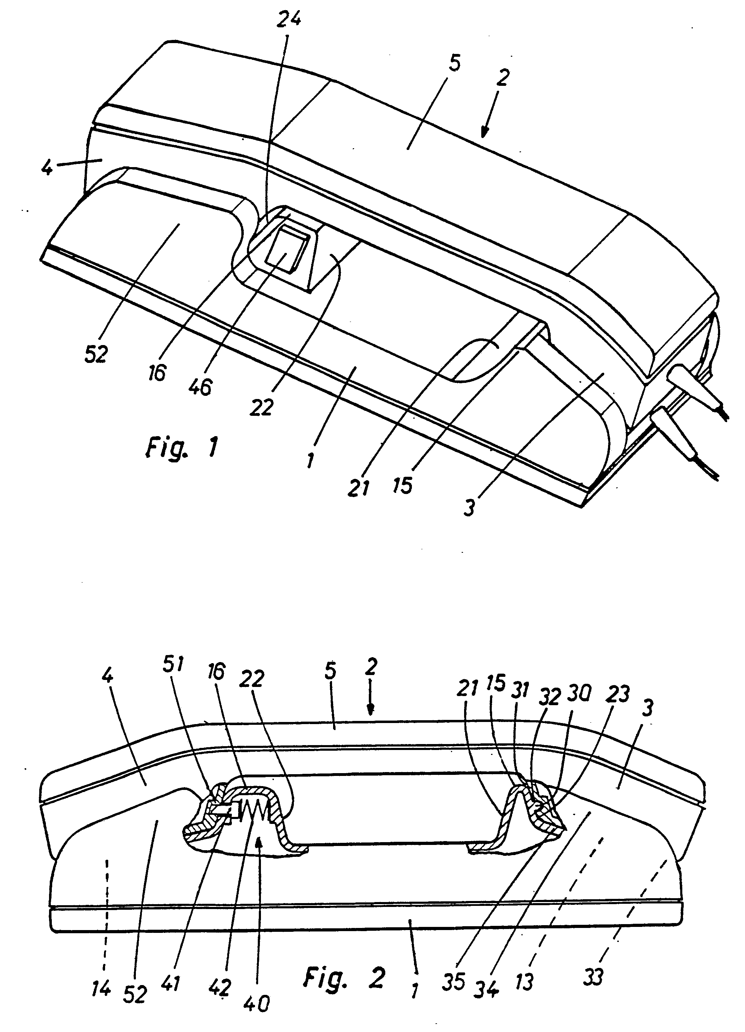

Das in Fig. 1 bis 4 dargestellte Autotelefon hat eine im Fahrzeug zu befestigende, als Auflagevorrichtung ausgebildete Halterung 1 für den Sprechhörer (Handapparat) 2. Die Sprechmuschel 3 (d. i. der die Sprechkapsel aufnehmende Gehäuseteil des Sprechhörers) und die Hörmuschel 4 stehen in der üblichen Weise quer zum Griff 5 des Sprechhörers vor. Die Halterung 1 hat zwei Lagermulden 13 und 14 für die Sprech- und die Hörmuschel 3 und 4. Die beiden Lagermulden 13 und 14 sind an den einander zugewandten Enden durch je eine Erhebung 15 und 16 begrenzt. Die einander zugewandten Wände der Erhebungen 15, 16 sind mit 21, 22, die einander abgewandten Wände mit 23, 24 bezeichnet.

An der Wand 23 der Erhebung 15 ist eine die Sperre für die Sprechmuschel 3 bildende Nase 30 angeformt, die in eine Vertiefung 32 an der Seite 31 der Sprechmuschel 3 hinein greift. Die Lagermulde 13 ist am der Erhebung 15 abgewandten Ende 33 offen und hat Seitenwände 34, welche die Sprechmuschel 3 gegen eine seitliche Verschiebung sichern.

Die Erhebung 16 ist hohl und in ihr ist eine Sperr- oder Verriegelungsvorrichtung 40 mit einer Ausrückvorrichtung angeordnet. Die Verriegelungsvorrichtung 40 hat einen die Sperre für die Hörmuschel 4 bildenden Schnappriegel (Sperrklinke) 41, der durch eine Oeffnung in der Wand 24 hindurchgeführt und durch eine an der Wand 22 abgestützte Feder 42 belastet ist. Der Schnappriegel 41 ist an einem drehbar um eine Achse 43 gelagerten Arm 44 angeordnet und mit einem Finger 45 versehen, der an der Keilfläche eines mittels einer Taste 46 in Längsrichtung vorschiebbaren Keils 47 liegt. Durch Druck auf die durch die Seitenwand 48 aus dem Gehäuse 16 der Verriegelungsvorrichtung 40 herausragende Taste 46 wird der Keil 47 vorgeschoben, wobei der Finger 45 an der Keilfläche gleitet und den Schnappriegel 41 gegen die Kraft der Feder 42 in das Gehäuse 16 der Verriegelungsvorrichtung 40 zurückzieht. Wird die Taste 46 losgelassen, drückt die Feder 42 den Schnappriegel 41 in die in der Zeichnung dargestellte Ruhelage, wobei der Finger 45 den Keil 47 mit der Taste 46 zurückschiebt, bis deren Anschlag 49 an der Innenseite der Seitenwand 48 anschlägt. Die Hörmuschel 4 hat an ihrer der Sprechmuschel 3 zugewandten Seite eine Aussparung 51 für den Schnappriegel 41 und dieser ist an seiner oberen Seite nach Art einer Schlossfalle abgeschrägt, so dass er beim Auflegen des Sprechhörers 2 zunächst durch den unten an die Aussparung 51 angrenzenden Teil der Hörmuschel 4 zurückgedrängt wird und dann in die Aussparung 51 einschnappt. Die Seitenwände 52 der Lagermulde 14 sorgen dabei für die seitliche Führung der Hörmuschel 4.

Der Sprechhörer 2 kann in horizontaler und in nach vorne oder nach hinten geneigter Lage aufgelegt werden. Wenn er mit der Sprechmuschel 3 voran aufgelegt wird, gleitet zuerst die Nase 30 in die Vertiefung 32 und anschliessend drängt der unten an die Aussparung 51 angrenzende Teil der Hörmuschel 4 den Schnappriegel 41 zurück, bis dieser in die Aussparung 51 einschnappt. Wenn er mit der Hörmuschel 4 voran aufgelegt wird, schnappt zuerst der Schnappriegel 41 ein und anschliessend schlägt der schräg von unten an die Vertiefung 32 angrenzende Teil der Sprechmuschel 3 an die Nase an. Durch Druck auf den Sprechhörer 2 biegt sich dessen aus Kunststoff bestehendes Gehäuse infolge seiner Eigenelastizität etwas auf und die Nase 30 rutscht entlang der schrägen Fläche der Sprechmuschel 3 in die Vertiefung 32 hinein. Der Sprechhörer 3 ist nun durch den Schnappriegel 41 und die Nase 30 gegen ein Abheben und durch die Wände 23, 24 gegen eine Längsverschiebung und damit ein Abrutschen vom Riegel 41 bzw. der Nase 30 gesichert. Ein seitliches Verrutschen des Sprechhörers 3 wird vom Schnappriegel 41 un der Nase 30 sowie zusätzlich noch durch die Seitenwände 34, 52, der Lagermulden 13, 14 verhindert.

Wenn bei einem Unfall eine starke Zugkraft auf den Sprechhörer 2 wirkt — man rechnet mit Beschleunigungen bis zu 30 g — bleibt dieser an der Halterung 1 gesichert und zwar selbst dann, wenn er sich infolge seiner Eigenelastizität etwas verbiegt. Denn die Zugkräfte greifen am Schwerpunkt des Sprechhörers, also am Griff 5 zwischen der Sprech- und Hörmuschel 3, 4 an und bewirken deshalb nicht ein Aufbiegen, sondern im Gegenteil ein Zusammenbiegen des Sprechhörers 2, d. h. eine Annäherung von Sprech- und Hörmuschel 3, 4 und damit sogar noch eine festere Halterung.

Selbstverständlich ist die Nase 30 so bemessen, dass sie genügend weit in die Vertiefung 32 hineingreift, wobei die Abmessung durch die Elastizität des Sprechhörers 2 begrenzt ist, nämlich nur so gross zu wählen ist, dass der zum Aufbiegen des Sprechhörers 2 erforderliche Druck ohne weiteres mit der den Sprechhörer haltenden Hand ausgeübt werden kann. Statt abgerundet, wie in Fig. 2 dargestellt, kann die Nase 30 auch wie eine Klinke oder eine menschliche Nase ausgebildet sein, nämlich oben eine schräge und unten eine horizontale Fläche haben.

Zum Abheben wird der Sprechörer 2 mit der rechten Hand ergriffen und gleichzeitig mit deren Daumen auf die Taste 46 gedrückt, wodurch der Schnappriegel 41 ausgerückt wird. (Greift man mit der linken Hand an, so kann die Taste 46 mit dem Zeigefinger betätigt werden.) Für das einhändige Abnehmen des Sprechhörers ist es wesentlich, dass die Taste 46 bequem mit einem Finger der den Griff 5 umgreifenden Hand gedrückt werden kann. Dies ist beim dargestellten Ausführungsbeispiel durch die Anordnung der Taste 46 an der Seite der in den Eckbereich zwischen Griff 5 und der Hörmuschel 4 hineinragenden Erhebung 16 gewährleistet.

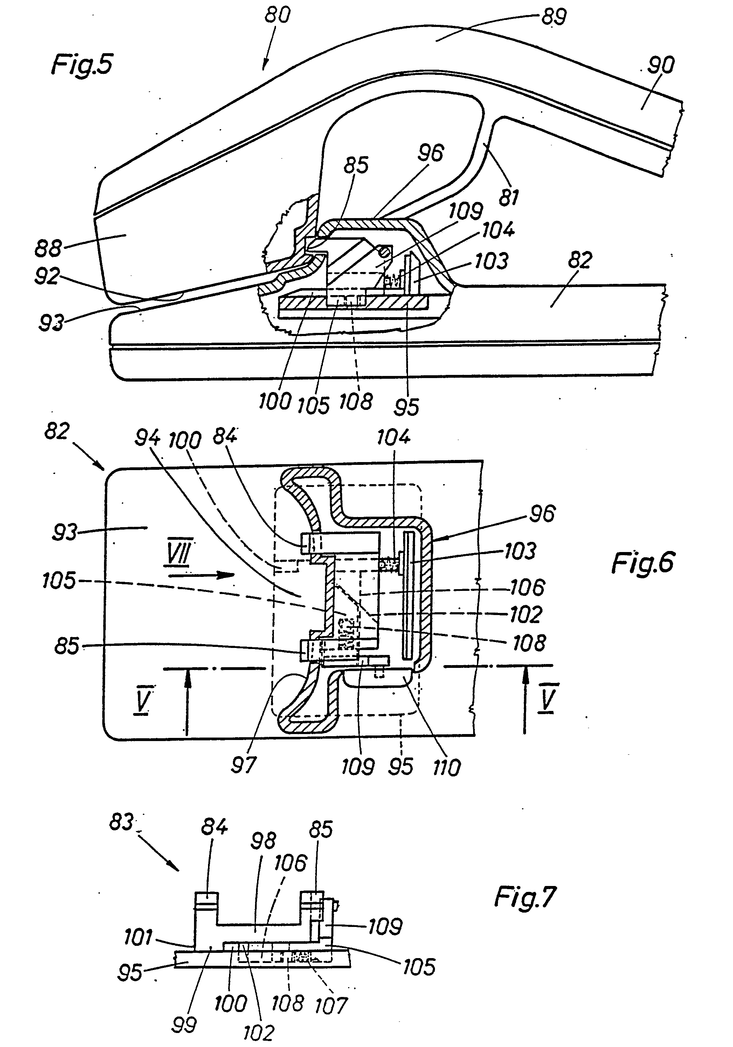

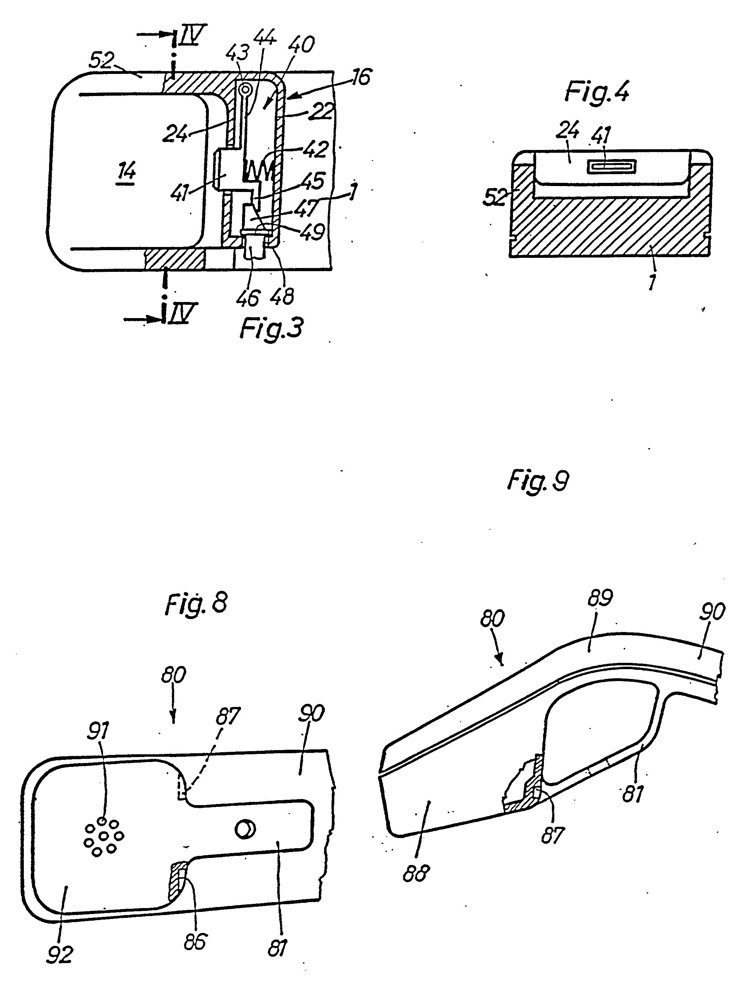

Bei der in Fig. 5-9 dargestellten Variante des Autotelefons hat der Sprechhörer 80 einen Bügel 81 und die Auflagevorrichtung bzw. Halterung 82 eine Sperr- oder Verriegelungsvorrichtung 83, deren Schnappriegel 84, 85 in Aussparungen 86, 87 der Hörmuschel 88 greifen, wie im folgenden erläutert.

Der Sprechhörer 80 ist in Längsrichtung stumpfwinklig abgebogen, wobei die Abbiegung 89 im an die Hörmuschel 88 angrenzenden Teil des Griffs 90 gebildet ist. Der Bügel 81 ist schmaler als die Hörmuschel 88 ausgeführt und erstreckt sich vom Rand der die Schallöffnungen 91 aufweisenden Wand 92 der Hörmuschel über den Eckbereich zwischen der Hörmuschel und dem Griff und über die Abbiegung 89 hinweg an die Innenseite des an die Abbiegung anschliessenden, geradlinig zur Sprechmuschel verlaufenden Teils des Griffs 90. Die Aussparungen 86, 87 sind an dem der Sprechmuschel zugewandten, unteren Randbereich der Hörmuschel 88 beidseits des Bügels 81 angeordnet.

Die Halterung 82 ist am hinteren (in Fig. 5 und 6 nicht dargestellten) Ende gleich wie die Halterung 1 mit einer Lagermulde für die Sprechmuschel und einer in eine Vertiefung oder Aussparung der Sprechmuschel greifenden Nase ausgebildet. Am vorderen Ende hat die Halterung 82 keine Lagermulde, sondern eine ebene oder leicht konvex gewölbte Auflagefläche 93 für die Hörmuschel 88. Die Halterung 82 ist über ihre ganze Länge gleich breit ausgeführt und der Sprechhörer 80 verjüngt sich von der Hör- zur Sprechmuschel, so dass die gleich breit wie die Halterung 82 ausgeführte Hörmuschel 88 bündig an die Ränder der Halterung anschliesst und die schmalere Sprechmuschel in die Lagermulde passt.

Die Verriegelungsvorrichtung 83 ist auf einer in der hohlen Halterung 82 montierten Platte 95 angeordnet und ragt in den durch eine an die Auflagefläche 93 angrenzende Erhebung 96 der Halterung begrenzten Hohlraum. Die vordere Wand 97 der Erhebung 96 ist dem die Aussparungen 86, 87 aufweisenden, unteren Randbereich der Hörmuschel 88 angepasst und entsprechend diesem zur Vertikalen geneigt, so dass die Hörmuschel beim Auflegen in Fig. 5 nach links (von der Lagermulde für die Sprechmuschel hinweg) und beim Abheben nach rechts rutscht. Die Wand 97 hat zwei Oeffnungen für die beiden nach Art einer Schlossfalle oben abgeschrägten Schnappriegel 84, 85, die an den Schenkeln eines U-förmigen Trägers 98 angeformt sind. Die obere Wand der Ehebung 96 weist eine zwischen die Schenkel des U-Trägers 98 hineinragende Einbuchtung 94 auf, welche den Bügel 81 des aufgelegten Sprechhörers 80 aufnimmt. Der U-Träger 98 hat einen auf der Platte 95 gleitenden, trapezförmigen Fuss 99 mit einer Nut, die auf einer in Längsrichtung der Halterung 82 auf der Platte 95 angeordneten Führungsschiene 100 geführt ist. Der eine Schenkel 101 des trapezförmigen Fusses 99 ist bündig mit der in Fig. 6 oberen (in Fig. 7 linken) Seitenfläche des Trägers 98, der andere Schenkel 102 grenzt an das vordere, (in Fig. 6 linke) Ende der Nut an und verläuft unter einem Winkel von 45° schräg nach hinten von der Nut weg. Eine an einer Stützwand 103 abgestützte Druckfeder 104 drückt den Träger 98 in Fig. 6 nach links, wodurch der schräge Schenkel 102 an eine entsprechend schräge Randfläche eines Schiebers 105 einer Ausrückvorrichtung gedrückt wird. Der Schieber 105 ist in einer rechteckigen Vertiefung 106 der Platte 95 senkrecht zur Schiene 100 verschiebbar gelagert und zwar gegen die Kraft einer Druckfeder 107, die in einer Aussparung an der Unterseite des Schiebers angeordnet und deren eines Ende am in Fig. 6 unteren Rand der Aussparung und deren anderes Ende an einem vom Boden der Vertiefung 106 vorstehenden Bolzen 108 abgestützt ist, der einen Anschlag für den in Fig. 6 oberen Rand der Aussparung bildet und den Schieber 105 gegen die Kraft der Feder 107 in der in der Zeichnung dargestellten Ruhelage hält. Die Dicke des Schiebers 105 ist so bemessen, dass dieser aus der Vertiefung 106 herausragt und die an den Fuss 99 angrenzende (in Fig. 7 rechte), untere Fläche des Trägers 98 gleitend auf ihm abgestützt ist. Am in Fig. 6 unteren Ende des Schiebers 105 ist ein schräg nach oben ragendes, plattenförmiges Organ 109 angeformt, das eine Drucktaste 110 trägt, welche durch eine Aussparung in der Seitenwand der Erhebung 96 drückbar ist. Die Drucktaste 110 wird zweckmässig als Leuchttaste ausgeführt.

Beim Auflegen des Sprechhörers 80 werden die Schnappriegel 84, 85 vom Rand der Hörmuschelwand 92 zurückgedrängt, worauf sie unter der Wirkung der Feder 104 in die Aussparungen 86, 87 einschnappen. Zum Abheben des Sprechhörers wird die Taste 110 mit dem Daumen der ihn ergreifenden Hand gedrückt, wodurch der Schieber 105 gegen die Kraft der Feder 107 vorgeschoben wird, der schräge Schenkel 102 des Trägerfusses 99 an der schrägen Randfläche des Schiebers 105 gegen die Kraft der Feder 104 zurückgleitet und die Schnappriegel 84, 85 aus den Aussparungen 86, 87 ausrücken. Beim Abheben des Sprechhörers wird der Daumen an den vom Bügel 81 umschlossenen Griffteil gelegt, was infolge des durch die Abbiegung 89 geschaffenen, grossen Zwischenraums zwischen dem Bügel und dem Griff nicht nur mühelos, sondern auch zwangsläufig geschieht, weil der Bügel eine Bewegung des Daumens aus dem von ihm umschlossenen Griffbereich heraus behindert. Der Bügel 81 sichert dann den Sprechhörer 80 gegen ein aus der Hand gleiten. Wegen des durch die Abbiegung 89 geschaffenen, grossen Zwischenraums zwischen Bügel 81 und Griff 90, kann der Daumen beim Auflegen des Sprechhörers im Bügel belassen werden.

Die Halterung kann in jeder gewünschten Lage im Fahrzeug befestigt und statt horizontal, z. B. auch vertikal angeordnet werden.

Die Nase 30, auf welche die Ausrückvorrichtung nicht wirkt, kann ohne weiteres statt an der Halterung auch am Sprechhörer, insbesondere der Sprechmuschel, gebildet sein. Grundsätzlich könnte man auch die Sperrklinke bzw. -klinken, auf welche die Ausrückvorrichtung wirkt, zusammen mit dieser am Sprechhörer anordnen, wobei die Taste der Ausrückvorrichtung z. B. an der Unterseite des Griffs des Sprechhörers angeordnet werden könnte. Gegenüber der Anordnung der Ausrückvorrichtung und der von ihr beaufschlagten Sperrklinke bzw. -klinken an der Halterung hat dies jedoch den Nachteil, dass der Sprechhörer schwerer und seine Handlichkeit beeinträchtigt wird.

Der Gabel- oder Hakenumschlater eines Autotelefons für Gegensprechen kann am Boden der den Bügel aufnehmenden Vertiefung 36, 94, die Sprechtaste eines Autotelefons für Wechselsprechen kann an der Innenseite des Griffs des Sprechhörers zwischen dem Bügel und der Sprechmuschel angeordnet sein.

**Patentansprüche**

1. Telefon, insbesondere Autotelefon, mit einer in einem Fahrzeug zu befestigenden Halterung (1 ; 82), an welcher der Sprechhörer (2 ; 80) durch zwei Sperren (41 ; 84, 85 ; 30) gegen Zug gesichert gehalten ist, deren eine durch wenigstens eine nach Art einer Schlossfalle ausgebildete, federbelastete, durch Druck auf den Sprechhörer (2 ; 80) beim Auflegen überwindbare und zum Abheben des Sprechhörers (2 ; 80) mittels einer Ausrückvorrichtung (46 ; 110) lösbare Sperrklinke (41 ; 84, 85), und deren andere durch eine fest an der Halterung oder dem Sprechhörer vorgesehene Nase (30) gebildet ist, die durch eine nur nach Lösen der einen Sperre (41 ; 84, 85) mögliche Bewegung des Sprechhörers (2 ; 80) überwindbar ist, dadurch gekennzeichnet, dass die beiden Sperren (41 ; 84, 85 ; 30) die Sprech- und die Hörmuschel (3, 4 ; 88) an zwei deren einander zugewandte Seiten abstützenden Erhebungen (15, 16 ; 96) der Halterung (1 ; 82) sichern, und der Sprechhörer (2 ; 80) sowie die Nase (30) so ausgebildet sind, dass die Nase (30) durch Druck auf den Griff (5 ; 90) des Sprechhörers (2 ; 80) unter Ueberwindung des durch die Elastizität des Griffs (5 ; 90) gegebenen Rastwiderstands in eine Aussparung am Sprechhörer (2 ; 80) oder der Halterung einrastet.

2. Telefon nach Anspruch 1, dadurch gekennzeichnet, dass die Nase (30) nach Ausrücken der Sperrklinke bzw. -klinken (41 ; 84, 85) durch eine Bewegungskomponente in Längsrichtung des Sprechhörers (2 ; 80) ausrückbar ist, und die Abstützfläche (24 ; 97) derjenigen Erhebung (16 ; 96), an die die Hör- oder Sprechmuschel (4 ; 88) mittels der Sperrklinke bzw. -klinken (41 ; 84, 85) gehalten ist, geneigt ist, so dass der Sprechhörer (2 ; 80) beim Abheben eine Bewegungskomponente in seiner Längsrichtung erhält, wenn die Hör- bzw. Sprechmuschel (4 ; 88) nach Ausrücken der Sperrklinke bzw. -klinken (41 ; 84, 85) an dieser Abstützfläche (24 ; 87) nach oben gleitet.

3. Telefon nach Anspruch 1 oder 2, dadurch gekennzeichnet, dass die Ausrückvorrichtung in einer die Hörmuschel (4 ; 88) abstützenden Erhebung (16 ; 96) angeordnet und mittels wenigstens einer Taste (46 ; 110) betätigbar ist, die seitlich an dieser Erhebung (16 ; 96) angeordnet ist, so dass sie mit einem Finger der den Griff (5 ; 90) des Sprechhörers (2 ; 80) umgreifenden Hand betätigbar ist.

**Claims**

1. Telephone, especially a car telephone, with a holder (1 ; 82) which can be fastened in a vehicle and on which the handset (2 ; 80) is kept protected against pulling off by two locks (41 ; 84, 85 ; 30), one of which is formed by at least one springloaded pawl (41 ; 84, 85) which is designed in the form of a lock catch and which can be overcome by pressure on the handset (2 ; 80) when replaced and which is releasable for the lifting-off of the handset (2 ; 80) by means of a disengaging device (46 ; 110), and the other of which is formed by a nose (30) which is provided fixedly on the holder of the handset and which can be overcome by a movement of the handset (2 ; 80) which is possible only after release of the one lock (41 ; 84, 85), characterised in that the two locks (41 ; 84, 85 ; 30) secure the mouthpiece and the earpiece (3, 4 ; 88) on two protruding regions (15, 16 ; 96) of the holder (1 ; 82) which support the mutually facing sides thereof, and the handset (2 ; 80) as well as the nose (30) are so designed that the nose (30), by pressure on the handle (5 ; 90) of the handset (2 ; 80), which serves to overcome the detent resistance afforded by the elasticity of the handle (5 ; 90), engages into a recess on the handset (2 ; 80) or the holder.

2. Telephone according to claim 1, characterised in that, after disengaging of the pawl or pawls respectively (41 ; 84, 85), the nose (30) is disengageable by a motion component in the longitudinal direction of the handset (2 ; 80), and the supporting surface (24 ; 97) of that protruding region (16 ; 96) on which the earpiece or mouthpiece (4 ; 88) is held by means of the pawl or pawls respectively (41 ; 84, 85) is inclined so that the handset (2 ; 80), upon being lifted, is given a motion component in its longitudinal direction when the earpiece or mouthpiece respectively (4 ; 88), after disengaging of the pawl or pawls respectively (41 ; 84, 85), slides upwardly on this supporting surface (24 ; 97).

3. Telephone according to claim 1 or 2, characterised in that the disengaging device is arranged in a protruding region (16 ; 96) supporting the earpiece (4 ; 88) and is actuable by means of at least one pushbutton (46 ; 110) which is arranged laterally on this protruding region (16 ; 96) so that it is actuable with one finger of the hand embracing the handle (5 ; 90) of the handset (2 ; 80).

**Revendications**

1. Téléphone, en particulier téléphone de voiture, présentant un support (1 ; 82) qui est destiné à être fixé dans un véhicule et sur lequel le combiné (2 ; 80) est retenu fermement, à l'encontre d'une traction, par l'intermédiaire de deux verrous (41 ; 84, 85 ; 30) dont l'un est formé par au moins un cliquet de verrouillage (41 ; 84, 85) qui est chargé élastiquement, est réalisé à la manière d'un pêne de serrure, peut être inhibé par pression exercée sur le combiné (2 ; 80) lorsqu'on repose celui-ci, et est libérable au moyen d'un dispositif de déblocage (46 ; 110), en vue de soulever le combiné (2 ; 80), et dont l'autre est formé par un loquet (30) qui est prévu rigidement sur le support ou sur le combiné et peut être inhibé par un mouvement du combiné (2 ; 80), possible seulement après libération de l'un (41 ; 84, 85) des verrous, caractérisé par le fait que les deux verrous (41 ; 84, 85 ; 30) retiennent fermement les coquilles de microphone et d'écouteur (3, 4 ; 88) sur deux protubérances (15, 16 ; 96) du support (1 ; 82) qui soutiennent les côtés desdites coquilles tournés l'un vers l'autre, le combiné (2 ; 80), ainsi que le loquet (30), étant réalisés de telle sorte que le loquet (30) s'emboîte dans une échancrure ménagée sur le combiné (2 ; 80) ou sur le support, par pression exercée sur la poignée (5 ; 90) du combiné (2 ; 80), en surmontant la résistance à l'encliquetage due à l'élasticité de la poignée (5 ; 90).

2. Téléphone selon la revendication 1, caractérisé par le fait que, après le déblocage du cliquet ou des cliquets de verrouillage (41 ; 84, 85), le loquet (30) peut être dégagé par une composante de mouvement, dans le sens longitudinal du combiné (2 ; 80), et la surface d'appui (24 ; 97) de la protubérance (16 ; 96) sur laquelle la coquille d'écouteur ou de microphone (4 ; 88) est retenue, au moyen du ou des cliquets de verrouillage (41 ; 84, 85), est inclinée de telle sorte que, lorsqu'on soulève le combiné (2, 80), ce dernier soit soumis à une composante de mouvement, dans son sens longitudinal, lorsque la coquille respective d'écouteur ou de microphone (4 ; 88) glisse vers le haut, sur cette surface d'appui (24 ; 97), après le dégagement du cliquet ou des cliquets de verrouillage (41 ; 84, 85).

3. Téléphone selon la revendication 1 ou 2, caractérisé par le fait que le dispositif de déblocage est installé dans une protubérance (16 ; 96) soutenant la coquille d'écouteur (4 ; 88), et peut être actionné au moyen d'au moins un bouton-poussoir (46 ; 110) placé, sur le côté de cette protubérance (16 ; 96), de manière qu'il puisse être actionné avec un doigt de la main ceinturant la poignée (5 ; 90) du combiné (2 ; 80).

Fig. 1

Fig. 2

Fig.5

Fig.6

Fig.7

Fig.3

Fig.4

Fig.9

Fig.8